# EUROPEAN PATENT SPECIFICATION

(11) **EP 2 908 592 B1**
(45) Date of publication and mention of the grant of the patent: **03.05.2017**
(21) Application number: 14155007.9
(22) Date of filing: 13.02.2014
(51) Int. Cl.: H04W 72/12, H04W 84/04

(54) **Radio resource allocation methods using overhearing and inter-cell communication**
Funkressourcenzuweisungsverfahren durch Mithören und interzellulärer Kommunikation
Procédés d'affectation de ressources radio au moyen de l'écoute et de la communication intercellulaire

(43) Date of publication of application: 19.08.2015
(73) Proprietor: FUJITSU LIMITED, Kawasaki-shi, Kanagawa 211-8588 (JP)
(72) Inventor: Hunukumbure, Rajaguru Mudiyanselage Mythri, Hillingdon, Middlesex UB8 3WF (GB)
(74) Representative: Wilding, Frances Ward

(56) References cited:
- ELSHERIF AHMED R ET AL: "Resource Allocation in Two-Tier Heterogeneous Networks through Enhanced Shadow Chasing", IEEE TRANSACTIONS ON WIRELESS COMMUNICATIONS, IEEE SERVICE CENTER, PISCATAWAY, NJ, US, vol. 12, no. 12, 1 December 2013 (2013-12-01), pages 6439-6453, XP011534613, ISSN: 1536-1276, DOI: 10.1109/TWC.2013.101813.130732 [retrieved on 2013-12-17]
- TOSHIHIKO NAKANO ET AL: "Downlink power allocation with CSI overhearing in an OFDMA macrocell/femtocell coexisting system", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 454-459, XP032273020, ISSN: 2166-9570, DOI: 10.1109/PIMRC.2012.6362828 ISBN: 978-1-4673-2566-0
- NAKANO TOSHIHIKO ET AL: "Interference Mitigation Based on Partial CSI Feedback and Overhearing in an OFDMA Heterogeneous System", 2013 IEEE 77TH VEHICULAR TECHNOLOGY CONFERENCE (VTC SPRING), IEEE, 2 June 2013 (2013-06-02), pages 1-5, XP032547932, ISSN: 1550-2252, DOI: 10.1109/VTCSPRING.2013.6692600 [retrieved on 2013-12-22]
- "Dynamic Inter-cell Interference Coordination (ICIC) and Signaling ; C80216m-08_528", IEEE DRAFT; C80216M-08_528, IEEE-SA, PISCATAWAY, NJ USA, vol. 802.16m, 3 July 2008 (2008-07-03), pages 1-7, XP017633465, [retrieved on 2008-07-03]
- TALHA ZAHIR ET AL: "Interference Management in Femtocells", IEEE COMMUNICATIONS SURVEYS, IEEE, NEW YORK, NY, US, vol. 15, no. 1, 1 January 2013 (2013-01-01), pages 293-311, XP011493339, ISSN: 1553-877X, DOI: 10.1109/SURV.2012.020212.00101

## Description

The present invention relates to a radio resource allocation method and base station for use in cellular wireless communication systems, in particular an LTE/LTE-A or similar system.

Cell edge interference is a critical issue in any wireless network, and impacts the QoE (Quality of Experience) of the cell edge user. In a network like LTE, where time/frequency resources are partitioned to different users, significant interference occurs when the same resources are allocated to cell edge users in neighbour cells. The increased interference reduces cell edge data rates and the general QoS (Quality of Service). Hence improving cell edge user performance is a key target for wireless networks with any type of cells, ranging from the small Femto cells to large Macro cells often used to provide general "overlay" coverage.

Particularly, but not exclusively, the present invention relates to communication procedures in accordance with the LTE (Long Term Evolution) and LTE-Advanced radio technology standards as, for example, described in the 3GPP TS36 series specifications, Release 9, 10 and subsequent of the 3GPP specification series. However, the present invention is also applicable to UMTS, WiMAX and other communication systems in which a base station allocates time/frequency resources to a subscriber station (also referred to as "user terminal", "user equipment" or "UE", "mobile terminal" etc.) either on the downlink, or on the uplink.

### Background of the Invention

Wireless communication systems in which base stations (BSs) provide "cells" and communicate with subscriber stations within range of the BSs are widely known. In LTE for example, the base stations are generally called eNodeBs or eNBs and the subscriber stations are called user equipments or UEs.

As an embodiment of the present invention will be described later with respect to LTE, it may be worth briefly outlining some relevant aspects of LTE network topology and resource allocation.

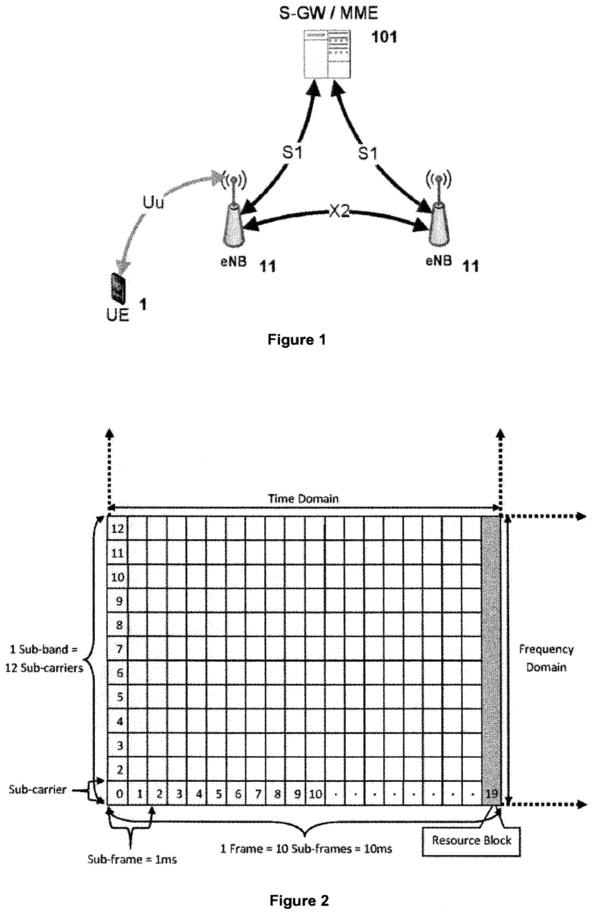

The network topology in LTE (which is used generally herein to also refer to LTE-A) is illustrated in Figure 1. As can be seen, each UE 1 connects over a wireless link via a Uu interface to an evolved node-B or eNB 11. It should be noted that various types of eNB are possible having differing transmit powers and therefore providing coverage areas (cells) of differing sizes. Multiple eNBs deployed in a given geographical area constitute a wireless network called the E-UTRAN (and henceforth generally referred to simply as "the network").

Each eNB 11 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks, including other cellular wireless communication networks.

The invention is applicable to "homogeneous networks"; that is, networks of base stations in a planned layout and which have similar transmit power levels, antenna patterns, receiver noise floors and similar backhaul connectivity to the core network. However, it is also applicable to the so-called "heterogeneous network", composed of two or more different kinds of cell.

A user equipment may be in range of (i.e. able to detect signals from) several cells at the same time, but in the simplest case it communicates with one "serving" cell or "primary" cell. A wireless communication system, and the cells within it, may be operated in FDD (Frequency Division Duplex) or TDD (Time Division Duplex) mode.

Figure 2 shows the basic units for resource allocation in the LTE (and thus also the LTE-A) system. Resources in the system have both a time dimension and a frequency dimension. Each frame of 10 ms is divided into 10 subframes each with a duration of 1 ms. The frequency bandwidth available in the system is divided into a number of sub-carriers. 12 sub-carriers make up 1 sub-band.

Time in the system is divided in units of a symbol time, two successive slots forming a "sub-frame". Thus the transmission signal is described by a resource grid of the sub-carriers and available symbols for OFDM or SC-FDMA transmission. Each element in the resource grid is called a resource element (RE) and each resource element corresponds to one modulation symbol (assuming OFDM transmission). Thus the individual squares in Figure 2 represent one subcarrier by one slot (7 symbols). An amount of resource consisting of a set number of sub-carriers and OFDM symbols (in this example 12 sub-carriers and 7 symbols) is referred to as a resource block (RB) in LTE indicated by the shaded portion in Figure 2.

The RBs available for use by UEs are allocated by a scheduling function at the eNodeB. Such scheduling is usually determined separately for each subframe; in other words, the resource allocation of a UE may vary from one subframe to the next. Resources are allocated to UEs both for downlink (DL) and uplink (UL) transmission. UEs which have established a connection with the eNodeB are synchronized with the eNodeB and configured so that their allocated downlink and uplink resources can be fully "orthogonal" (non-interfering) with those of other UEs within the cell.

In LTE, several channels for data and control signalling are defined at various levels of abstraction within the system. User data and also some signalling data is carried on a Physical Uplink Shared Channel (PUSCH). The control channels include a Physical Uplink Control Channel, (PUCCH), used to carry signalling from UEs including channel state information (CSI), as represented, for example, by channel quality indication reports, which include indications of modulation and coding scheme (MCS) and scheduling requests.

The invention relates to inter-cell interference between neighbouring cells. One of the most effective methods to control interference is to co-ordinate the resource allocations amongst the cells. One solution in this regard is through frequent communication amongst these cells, which requires high speed inter-connections. This solution in LTE is known as Inter Cell Interference Co-ordination (ICIC) (see for example "Dynamic Inter-cell Interference Coordination (ICIC) and Signaling; C80216m-08_528", IEEE DRAFT; C80216M-08_528 IEEE-SA, PISCATAWAY, NJ USA, vol. 802.16m, 3 July 2008) and in LTE-A as eICIC. However these inter-connections (termed as X2 in LTE) can be costly to deploy and maintain, especially in low cost solutions like Femto cells.

Overhearing techniques for mitigation of cell-edge interference are known to the inventors, and explained in related-art application EP14150210.4. In these techniques a neighbour eNB overhears CQI (Channel Quality Indicator) requests by cell edge users and this allows cells to acquire information about requested allocations in neighbouring cells and thus to adapt their own allocations. In more detail, the solution in related art application EP14150210.4 relies on overhearing only, the base station determining the likelihood of each sub-band being used by the neighbour cells, based on criteria like cell hierarchy and cell edge performance levels. If it detects a collision in the neighbour cell through increased NACKs, it will (unilaterally) change the related allocations. Such techniques thus require no eNB interconnection (or inter-cell communication) but simply allow the neighbours to be alert to possible allocations in the cell edge. However, overhearing provides only information about preferred allocations by the cell edge user and the exact allocation cannot be overheard, leading to possible collisions and interference. Other similar prior art is available in ELSHERIF AHMED R ET AL: "Resource Allocation in Two-Tier Heterogeneous Networks through Enhanced Shadow Chasing", IEEE TRANSACTIONS ON WIRELESS COMMUNICATIONS, IEEE SERVICE CENTER, PISCATAWAY, NJ US, vol. 12, no. 12, 1 December 2013, TOSHIKO NAKANO ET AL: "Downlink power allocation with CSI overhearing in an OFDMA macrocell/femtocell coexisting system" PERSONAL INDOOR AND MOBILE RADIO COMMUNICATION (PIMRC) 2012 IEEE 23RD INTERNATIONAL SYMPOSIUM ON, IEEE, 9 September 2012 and NAKANO TOSHIHIKO ET AL: "Interface Mitigation Based on Partial CSI Feedback and Overhearing in an OFDMA Heterogeneous System" 2013 IEEE 77TH VEHICULAR TECHNOLOGY CONFERENCE (VTC SPRING) IEEE, 2 June 2013

It is therefore desirable to provide a method of reducing interference which does not necessarily require the speed of the X2 links, yet achieves a performance which is preferably similar to ICIC, better than the simple overhearing.

According to embodiments of one aspect of the invention, there is provided a radio resource allocation method, for use in a cellular wireless communication system with a plurality of base stations configured to share sub-band allocations amongst a plurality of user equipments of the system and comprising a first base station providing a first cell and a second base station providing a second cell, in which method the first base station carries out the process of: receiving in-cell uplink control information from one or more user equipments served by the first cell and overhearing uplink control information transmitted from one or more user equipments served by the second cell to the second base station; assigning a sub-band allocation, taking the in-cell uplink control information and overheard uplink control information into account; receiving an alert from the second base station as to a particular user equipment sub-band allocation in the second cell with which first base station transmission is interfering; wherein the first base station transmission causing interference is transmission to a user equipment in a position where the user equipment's uplink control information transmission cannot be overheard by the second base station; and using the overheard uplink control information and in-cell uplink control information and alert to adjust the sub-band allocation in the first base station cell.

Thus a sub-band allocation within a first cell is made based on received in-cell uplink control information and on overheard uplink control information from a user in a second cell and adjusted based additionally on an alert from the second base station of the second cell indicating an interfered sub-band allocation. The inventors have come to the realisation that it is possible to combine some of the principles of the known ICIC techniques with the related art, overhearing, in an efficient two-step process to provide enhanced cell edge performance. This is achieved without necessarily using all of the functionality of the X2 link required by ICIC.

In the method of invention embodiments, it is useful if the base stations can identify individual UEs served by other cells. Preferably, the method includes the first base station sending a per-session identifier to the second base station, for example C-RNTI in an LTE system for each user equipment served by the first cell, and receiving identifiers for each user equipment served by the second cell. The identifier can be sent over a core network link before transmission and reception. The C-RNTI is used to scramble the data as an encryption for security. Only the serving cell knows the C-RNTI identity, and invention embodiments propose to share this with neighbour cells so the UE information can be decrypted.

In one embodiment, the first base station and second base station are two base stations in a cluster of two or more collaborating base stations, and the base stations share a set of spreading codes, such as Zadoff-Chu (ZC) spreading codes in an LTE system. ZC codes are used to spread the data, just as in CDMA. So one bit of data, when multiplied by a ZC code, becomes a 12 bit stream (for example). In the 12 bit code set there are 12 mutually orthogonal codes. Hence, 12 UEs can concurrently use these codes and the BS can still de-code them. This invention embodiment partitions the ZC code set among the group of cells, so that neighbours will know from which cell an uplink sub-band request originates. In an LTE situation with both these features, spreading and scrambling occurs in the UE originated data set, and these processes need to be reversed in order to understand the sub-band requests.

When a UE is within range of a cell that is not its serving cell, so that it can receive interference from downlink transmission from the non-serving cell and/or the base station of the non-serving neighbouring cell can overhear the UE's uplink transmission, it can be regarded as a cell-edge UE.

According to embodiments of the present invention, the first base station overhears uplink control information transmitted from such a cell-edge UE served by the second cell. The first base station can also overhear other uplink control transmission from the UE. The uplink control transmission may be uplink control messages relating to failed downlink reception from the UE. Both the uplink control information and the uplink control messages may be transmitted on the same uplink control channel, such as PUCCH in LTE. Preferably, the first base station also overhears uplink control messages relating to failed downlink reception from the particular UE with which the first base station's transmission is interfering, for example NACK messages in an LTE system. This can allow the first base station to prepare itself for a possible re-allocation of sub-bands following an alert from the second base station. For example, it can review its sub-band allocations and analyse alternative allocation options.

Invention embodiments can use any direct or indirect inter-cell communication link to send and receive the alert of an interfered band, and will most likely make use of the links already available in the system. For example in an LTE system, the alert from the second base station may be received over a link between the cells (such as the X2 link) or via links from each base station to the core network (such as the S1 link). More preferably, the alert is received over a link to a core network of the communication system, preferably over the S1 link to the evolved packet core in an LTE system.

The sub-band allocations are essentially a measure of transmission frequency bandwidth available to the UE in question for uplink transmission towards the base station and/or downlink transmission from the base station. The sub-band is a part of the whole transmission frequency bandwidth available for use by the system. The base station allocates time-frequency resources for uplink transmission by the UE and/or downlink transmission to the UE within the sub-band allocation. For example, in LTE and other systems these may be termed as "resource blocks".

A system of one or more priorities may be used to assist in sub-band allocations. Any suitable system of priority may be used but preferably the sub-band allocations employ a user equipment priority of user equipments of the system or a cell priority order of cells within the communication system, or both.

Thus, the sub-band allocations may take into account user equipment priorities of user equipments of the system to mitigate any potential sub-band allocation conflicts.

Preferably, the overheard uplink control information and/or in-cell uplink control information include an ordered set of sub-band requests from each user equipment overheard or served by the first cell. Thus each UE requests transmission frequency bandwidth (and in response the base station schedules time-frequency resource within a preferred frequency range). According to this preferred embodiment, each user equipment does not provide a single sub-band request but rather an ordered set of maybe 3 or 4 sub-band requests. Hence the base station has some flexibility in allocating sub-bands to allow for conflicting requests from the UEs. The ordered sets may be provided in order of UE preference. The order relates, in an LTE embodiment, to the potential data rate achievable in each sub-band and this can also be used for a user equipment priority as explained hereinafter.

In one preferred embodiment, each sub-band request includes a user equipment priority per sub-band, for example in the form of an indication of a potential data rate for each sub-band request in the ordered set. The user equipment priority may be provided as a modulation and coding scheme (MCS) level in an LTE system. Thus the MCS or other priority indicator may be used not only to show which of two or more UEs in the entire system is allocated a sub-band with allocation conflict, but also, as mentioned above, the MCS may be used to order the sub-band requests for each UE, so that the sub-band with the highest MCS is considered first, as the most preferable option for that UE.

A simple system may be used for the cell priority to give a fair allocation between the cells or indeed permanently to favour a certain cell. In one preferred embodiment, the cell priority order is a rotating priority. This can change, for example, with each CQI period in an LTE system. The cell priority order may determine the way in which sub-bands are allocated. For example the cell priority order may determine the order (time sequence) in which the sub-bands are allocated or, preferably all the base stations allocate at the same time, with knowledge of the current base station priority order. Thus sub-bands may be allocated to the first base station (if it has a higher priority) in preference to the second base station. Nevertheless, a UE served by the first base station may not receive an allocation in its first preferred sub-band, if a user equipment priority of an in-cell sub-band request or of an overheard sub-band request from a UE served by another cell (such as the second base station cell) is higher than that of the UE served by the first base station.

The full method of invention embodiments may only be carried out if there is a conflict in which base station transmission in the first cell interferes with a UE served by the second cell. Thus, initial or default sub-band allocations must have been made and transmission carried out in those sub-band allocations for the alert to be received. The adjustment of the default sub-band allocation advantageously takes not only the alert into account but also the overheard uplink control information and in-cell uplink control information. That is, in order to adjust its own sub-band allocation, the first base station will require control information (either stored, re-sent or new) relating to less preferred sub-bands of the one or more UEs whose sub-band allocation it is adjusting.

The method of invention embodiments can be employed in any suitable circumstances. It is particularly advantageous in the situation defined in which the first base station transmission causing interference is transmission to a user equipment in a position where the user equipment's uplink control information transmission cannot be overheard by the second base station.

Invention embodiments also extend to a method carried out in the second base station as defined hereinbefore. Thus in an embodiment of a further aspect of the invention, there is provided a radio resource allocation method, for use in a cellular wireless communication system with a plurality of base stations configured to share sub-band allocations amongst a plurality of user equipments of the system and comprising a first base station providing a first cell and a second base station providing a second cell, in which method the second base station carries out the process of: receiving in-cell allocations amongst a plurality of user equipments of the system and comprising a first base station providing a first cell and a second base station providing a second cell, in which method the second base station carries out the process of: receiving in-cell uplink control information from one or more user equipments served by the second cell and overhearing uplink control information transmitted from one or more user equipments served by the first cell to the first base station and assigning sub-band allocations to the user equipments in the second cell in dependence upon the in-cell and the overheard uplink control information; receiving uplink control messages from a particular user equipment served by the second cell wherein the first base station transmission causing interference is transmission to a user equipment in a position where the user equipment's uplink control information transmission cannot be overheard by the second base station; and having an interfered sub-band allocation, the uplink control messages being related to failed reception of downlink transmission to the particular user equipment; and sending an alert as to the interfered user equipment sub-band allocation to the first base station (F1) to allow the first base station to adjust the sub-band allocations in the first base station (F1) cell.

The skilled reader will appreciate that the process as defined for the first base station including all the sub-features and any combination thereof can also be carried out by the second base station with its own adjustment of transmission frequency bandwidth allocation to the UEs it is serving. This also applies to any other base stations in a cluster of collaborating base stations.

Invention embodiments extend to a method in the whole cellular wireless communication system or in a cluster of base stations. According to an embodiment of a still further aspect, there is provided a radio resource allocation method, for use in a cellular wireless communication system with a plurality of base stations configured to share sub-band allocations amongst a plurality of user equipments of the system, each base station is also configured to provide its own cell, in which method the system carries out the process of: the base stations receiving in-cell uplink control information from one or more user equipments served by their own cell and overhearing uplink control information transmitted from one or more user equipments served by the cell of the one or more other base stations; the base stations assigning sub-band allocations to the one or more user equipments in their own cell; taking the in-cell and overheard uplink control information into account; one base station sending an alert as to a particular user equipment sub-band allocation with which another base station transmission is interfering wherein the first base station transmission causing interference is transmission to a user equipment in a position where the user equipment's uplink control information transmission cannot be overheard by the second base station; and the other base station using its in-cell uplink control information, overheard uplink control information and alert to adjust a sub-band allocation in its own cell.

The first and second base stations may be members of the co-operating cluster of base stations. In one preferred embodiment, all the base stations (or all the base stations in the cluster) exchange UE identifiers (for example over the link to the core network) and then each base station makes a default sub-band allocation according to sub-band requests to its own cell-edge UEs and overheard requests from cell-edge UEs of other base stations in the cluster. Sub-bands may be assigned based on cell priority (such as a rotating priority) and UE priority (such as MCS levels in the sub-band request). If any of the base stations receive messages of failed or insufficient quality downlink reception from one of the UEs it serves, it can notify the interfered sub-band to the other base stations. Starting with the base station with the highest priority, each base station checks the interfered sub-band and in turn, if the NACKs continue, changes its allocation if it conflicts with the interfered sub-band allocation in the other cell.

The invention extends to apparatus and system aspects. The skilled reader will appreciate that the previously described method features and sub-features can apply in any combination to any of these apparatus and system aspects.

In an embodiment of a first base station aspect, there is provided a first base station in a cellular wireless communication system with a plurality of base stations configured to share sub-band allocations amongst a plurality of user equipments of the system, the first base station providing a first cell and a second base station providing a second cell, the first base station comprising: a receiver configured to receive in-cell uplink control information from one or more user equipments served by the first cell and to overhear uplink control information transmitted from one or more user equipments served by the second cell to the second base station; a controller configured to assign a sub-band allocation taking the in-cell uplink control information and overheard uplink control information into account; and an interface configured to receive an alert from the second base station as to a particular user equipment sub-band allocation in the second cell with which first base station transmission is interfering wherein the first base station transmission causing interference is transmission to a user equipment in a position where the user equipment's uplink control information transmission cannot be overheard by the second base station; wherein the controller is configured to use the overheard uplink control information and in-cell uplink control information and alert to adjust the sub-band allocation in the first base station cell.

In an embodiment of a second base station aspect, there is provided a second base station in a cellular wireless communication system with a plurality of base stations configured to share sub-band allocations amongst a plurality of user equipments of the system, a first base station providing a first cell and the second base station providing a second cell, the second base station comprising: a receiver configured to receive in-cell uplink control information from one or more user equipments served by the second cell and to overhear uplink control information transmitted from one or more user equipments served by the first cell wherein the first base station transmission causing interference is transmission to a user equipment in a position where the user equipment's uplink control information transmission cannot be overheard by the second base station; to the first base station; a controller configured to assign sub-band allocations to the user equipments in the second cell in dependence upon the in-cell and overheard uplink control information; wherein the receiver is configured to receive uplink control messages from a particular user equipment served by the second cell and having an interfered sub-band allocation, the uplink control messages being related to failed reception of downlink transmission to the particular user equipment; and further comprising an interface configured to send an alert as to the interfered user equipment sub-band allocation to the first base station to allow the first base station to adjust the sub-band allocations in the first cell.

In an embodiment of a system aspect, there is provided a cellular wireless communication system with a plurality of base stations configured to share sub-band allocations amongst a plurality of user equipments of the system and each configured to provide a cell, wherein: the base stations include receivers configured to receive in-cell uplink control information from one or more user equipments served by their own cell and to overhear uplink control information transmitted from one or more user equipments served by the cell of the one or more other base stations; the base stations include controllers configured to assign sub-band allocations to the one or more user equipments in their own cell, taking the in-cell and overheard uplink control information into account; the base stations include an interface configured to send an alert as to a particular user equipment sub-band allocation in their own cell with which other base station transmission is interfering wherein the first base station transmission causing interference is transmission to a user equipment in a position where the user equipment's uplink control information transmission cannot be overheard by the second base station; and wherein the base station controllers are configured to use the in-cell and overheard uplink control information and alert to adjust a sub-band allocation in their own cell.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form.

The invention is described in terms of particular embodiments. Other embodiments are within the scope of the following claims. For example, the steps of the invention can be performed in a different order and still achieve desirable results.

The apparatus according to preferred embodiments is described as configured or arranged to carry out certain functions. This configuration or arrangement could be by use of hardware or middleware or any other suitable system. In preferred embodiments, the configuration or arrangement is by software.

Elements of the invention have been described using the term "controller", "receiver", "transmitter" and "interface". The skilled person will appreciate that these terms and their equivalents may refer to parts of the base station that are spatially separate but combine to serve the function defined. Equally, the same physical parts of the base station may provide two or more of the functions defined.

For example, separately defined functions of the controller may be implemented using the same memory and/or processor as appropriate. The interface may be a wired interface or over the transmitter/receiver used for UE communication. The transmitter and receiver may be implemented separately or as a transceiver.

### Brief Description of the Drawings

Reference is made, by way of example only, to the accompanying drawings in which:
Figure 1 is a previously described schematic diagram showing the network topology in LTE;
Figure 2 is a previously-described diagram illustrating time-frequency resource division in LTE;
Figure 3 is a flowchart representing a general embodiment of the invention;
Figure 4 is a diagram of neighbouring cells in a 3 base station cluster;
Figure 5 is a flowchart for a detailed embodiment of the invention;
Figure 6 is a signalling diagram between 2 base stations including communications with 2 active cell-edge UEs;
Figure 7 is a schematic diagram illustrating overhearing in a 3-cell scenario;
Figure 8 is an example of overheard uplink control information in the 3-cell scenario; and
Figure 9 is a schematic diagram of a base station.

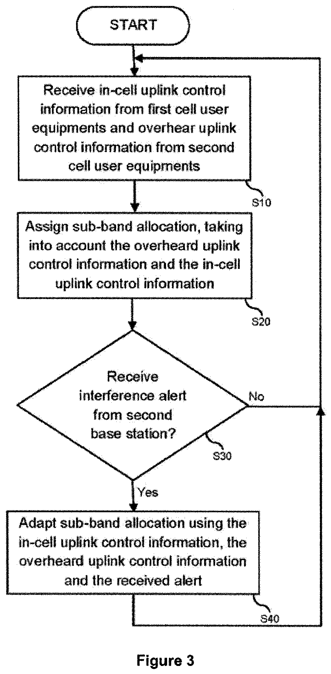

Figure 3 shows a flowchart of a general embodiment of the present invention, which refers to two co-operating base stations (BSs). In step S10, the first BS receives in-cell uplink control information from one or more UEs in the first cell and overhears uplink control information from one or more UEs in the second cell. The BS then assigns a sub-band allocation, taking the in-cell uplink control information and the overheard uplink control information into account in step S20. If the first BS receives an interference alert from the second BS in step S30, it adapts its own sub-band allocation using the in-cell information, the overheard information and the alert in step S40.

In some wireless communication methods it may be necessary to exchange information such as cell or UE information between base stations before the communication processes set out above can occur. This is not explained further in this general embodiment or shown in Figure 3 but can be assumed to have taken place, if necessary, at any point before or during the method, according to the wireless communication technology in use, for example LTE.

Looking at this general embodiment in more detail, the first BS can hear the band preference of the UEs in its own cell and can also overhear the uplink control information from one or more of the UEs in the second cell (step S10); in each case the UEs may, for example, send three or four band preferences. In order for the first BS to overhear UEs in the second cell, the UEs must be within the overhear zone of the first BS (in the second cell but within range of the first BS), which is likely to be at the cell edge. The first base station can use the in-cell uplink control information from UEs in its own cell and the overheard uplink control information from UEs in the second cell to allocate transmission bandwidth. For example, in a particular embodiment, the first base station assigns a default sub-band allocation to a UE in the first cell, based on the band preferences of the other UEs in the first cell and of the overheard UEs served by the second cell. Using the band preferences of the UEs reduces the risk of interference between UEs in different cells, particularly cell edge interference. There is however, still a chance that the band allocation of a UE in the first cell can cause interference to a UE in the second cell, and vice-versa.

If the same or similar resources (within the sub-band) are allocated to a UE in the first cell and also to a UE in the second cell, the first BS will cause interference to the UE in the second cell, if the UE in the second cell is in the overhear zone of the first BS. As a result, the UE in the second cell will exhibit an increase in uplink messages denoting failed transmission, such as NACKs (Negative Acknowledgements) in the HARQ (Hybrid Automatic Repeat Request) method of transmission error control. These failure messages will be heard by the second BS and also overheard by the first BS.

The first BS can then prepare itself for a possible re-allocation. For example, upon detecting the increase in NACKs, the second BS will send an alert to the first BS (step S20) with the resource allocation details of the interfered UE. The alert can be sent over any inter-cell communication method such as, for example, S1. When the alert is received by the first BS, it uses the resource allocation information contained in the alert, as well as the (heard) in-cell uplink control information and the overheard uplink control information of other UEs in the network, to adapt the resource allocation to one or more UEs in the first cell to try to mitigate conflicting resource allocations and interference (step S30).

The UE in the second cell will only receive interference from the first BS if the UE is located within the overhear zone of the first BS. Incidentally, it is unlikely that the UE of the first cell with which the UE in the second cell has a resource conflict, will be located within the overhear zone of the second BS. If the UE served by the first cell could be overheard by the second BS, then the second cell would have overheard the band preferences of the UE and the resource allocation conflict is unlikely to have occurred.

The further, more specific explanation set out below uses LTE terminology, but is equally applicable to other wireless communication systems.

Some invention embodiments utilize overhearing and inter-cell communication over the interface between the base stations and the core network, known as S1 in the LTE (the slower link, rather than the X2 link between base stations) to provide an interference control solution as an alternative to ICIC. In preferred embodiments, the methodology can be viewed as taking a holistic view about a group of cells and trying to optimize the QoS for all the cell edge users concerned.

In some circumstances, allocation is based on overhearing by default, but uses a rotating cell priority scheme to resolve conflicts of resource allocations. Embodiments also recognize that some cell edge UEs cannot be overheard and use the slower S1 based connections to communicate amongst the cells and resolve these possible collisions.

In other circumstances, a known ICIC method may not work when the X2 links partially break down, especially in bigger rural cells. In these cases, the hybrid method can be used as a fall-back option. The utilisation of overhearing and S1 or X2 based communication provides a novel methodology for combating inter-cell interference.

There is a distinction between two groups of cell edge users, when transmitting with omni directional eNB antennas. One group of cell edge UEs is sufficiently close to the neighbour eNBs, to receive interference from them in the downlink and for neighbour eNBs to overhear the PUCCH from these UEs in the uplink. The other group of cell edge UEs are further away from the common cell edges so the neighbour eNBs cannot overhear their PUCCH transmissions in the UL. However, as the eNB antennas are omni-directional and no beam-forming is considered, the sub-band allocations to these UEs can cause interference to other cell edge UEs (connected to neighbours) in the common cell edges.

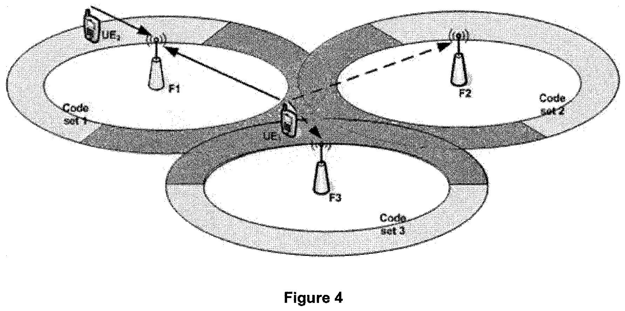

Figure 4 shows 3 neighbouring (adjacent) cells which are illustrated as femto cells provided by femto base stations F1, F2 and F3. The cells share spreading codes and code set 1 is allocated to F1 with code set 2 being allocated to F2 and code set 3 being allocated to F3. UE2 is on the cell edge of F1, at the far side of the cells provided by F2 and F3. UE1 is also connected to F1 at a cell edge, but is between F1, F2 and F3.

The cell edges shaded darker are considered as areas where the neighbour eNBs (one or more) can overhear uplink control information (the CQI requests and HARQ messages on the PUCCH).

The example UE1 is connected to eNB F1, and F2 and F3 can overhear the uplink control information from this UE. However, UE2 is also a cell edge UE for eNB F1, but F2 and F3 cannot overhear the information from UE2 in the uplink, since it is outside the overhearing area for both F2 and F3. Since eNB transmissions are omni-directional, a resource allocation for downlink transmission to UE2 by F1 can conflict with a similar allocation by F2 or F3 to their cell edge UEs and can cause interference. One positive factor in this situation is that the cell edge UE of F3 or F2 has to be within the dark grey region (overhear zone) to receive interference from F1 and F1 can overhear the sub-band requests of these UEs, as well as ACK/NACKs for positive/negative acknowledgement of receipt on HARQ. Considering (roughly) equal travel distances for downlink and uplink signals, if a neighbour eNB causes interference to a UE in the DL, it can overhear this UE's PUCCH transmissions in the UL.

Although this diagram shows only 3 eNBs, having more eNBs in another cluster would open up UE2 to another co-ordinating eNB group in an overhearing solution. Thus the basic solution presented here can be extended to other such groups. However the fact remains that the interference from DL transmissions to UE2 can reach users of F2 and F3, while these eNBs are not able to overhear the allocation preferences transmitted from UE2. This fact is taken into consideration in invention embodiments. If a 2x2 MIMO beam-forming (BF) solution is enacted, the DL transmissions can be limited to, for example, half the area of the full circular cell and this interference could usually be avoided. However, although static beam-foaming solutions can greatly reduce the events of a cell causing interference to a neighbour, due to imperfect deployments this problem can persist, particularly at the edges of the formed beams. In such cases having inter-cell communication (the alert) can be useful, as a fall-back option to resolve resource conflicts.

As mentioned in the introduction, there is a general objective to increase overall cell edge data rates, within the collaborating eNB cluster. To this end, if a similar overlapping band is requested by two or more cell-edge users, the band will be allocated to the user reporting a higher priority (MCS). If a similar (or same) MCS is reported by the two UEs, a rotating eNB priority scheme is employed to find the preferred user. For example, this priority can be routinely changed at every CQI reporting period (of maybe 128ms) or any other suitable criterion or time period can be employed. Although invention embodiments do not consider cell-centre users because there is no out-of-cell interference for those users, we assume that in the case of a similar band selection by cell-edge and cell-centre users, the cell-edge users will be given priority, even though their reported MCS will be generally lower than that of the cell-centre user.

The eNB can determine whether a UE is treated as a cell edge UE by looking at the MCS levels of reported sub-bands by the UE. If they are all (or a majority) are below a certain level, the UE can be categorized as cell edge. Even a UE physically closer to the eNB can report lower MCS due to such things as shadowing effects, and this UE will be (correctly) treated as a cell edge UE and given allocation priority.

As a general rule, requested bands are assigned to cell-edge users unless there are conflicts (identified through overhearing or hearing amongst own cell edge users) which make all the requested bands non-available. In such a case, the serving eNB requests the cell-edge UE to report another set of preferred sub-bands.

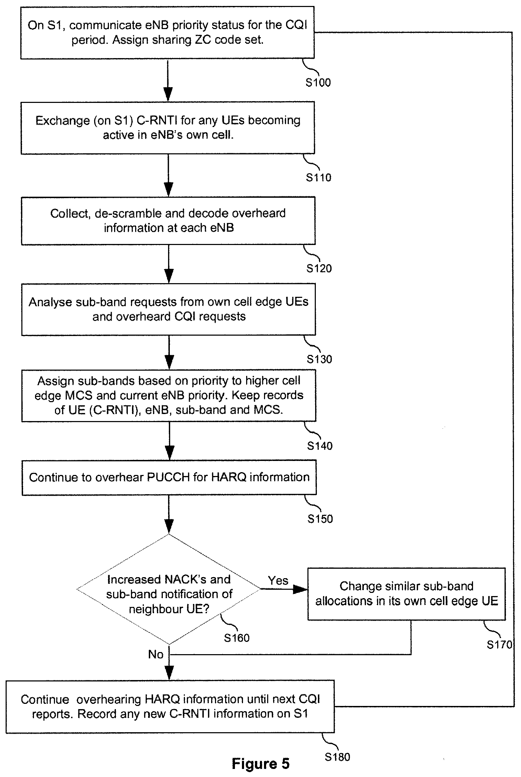

In a LTE implementation, ZC (Zadoff-Chu) spreading codes are shared amongst the collaborating eNBs. The sharing can be dynamically adjusted, to reflect the dynamic changes in the loading of the eNBs. In the flow chart of Figure 5, it is assumed that the changes can be at the same rate as CQI reporting, but this can be usually at a much slower rate, as configured in the eNBs. Additionally, the PUCCH data is scrambled with a UE specific C-RNTI (Cell radio Network Temporary Identifier). This identifier is constant during an active session for a given UE. The serving eNB shares this information with the neighbour eNBs (in the co-ordinating cluster) over S1, when a new UE becomes active. As the number of UEs is lower in the preferred target deployments of indoor femto cells and rural macro cells, and the length of a communication session for a UE is much longer than the scheduling interval, this additional requirement will not over-stretch the limited S1 data rates.

One of the notable points in invention embodiments is that if a eNB detects increased NACKs from its own cell edge UE, it alerts the neighbour eNBs over S1 (with the used sub-band details) and waits for action to be taken by the neighbour eNB first. This is because, as per the algorithm, the most cases of cell edge resource collisions occur when the neighbour eNB (say F2 in Figure 4) cannot overhear a faraway cell edge UE. For example, neighbours F2 and F3 cannot overhear UE2 in Fig. 4. The eNB in question (for example F2) may then allocate the UE2 sub-band(s) to its own cell edge UEs, if they are requesting the same sub-band. However the allocation preference of this UE served by F2 can be overheard by the original serving eNB (F1 transmitting to UE2 in Fig. 4). In the present scenario, it is assumed that UE2 has priority over this UE served by F2 (a higher MCS for example), so F1 allocates the sub-band despite overhearing the conflicting request. If the original eNB (F1) transmission then interferes with F2 transmission to this UE, then the exact allocation is notified over S1 by F2. Then it is straight forward for the original serving eNB (F1) to change the sub-band allocations to its own cell edge UE (UE2), so that the interference to the UE in neighbour cell F2 would reduce.

This particular allocation would reduce the data rates of the cell edge UE2 (as UE2 would have had higher MCS than the conflicting cell edge UE of F2 or F3, for the original allocation to happen) but it is a simple and effective means to control the collisions and improve the interfered UE's data rates and the QoE. The need for notifications over S1 is much less frequent than sub-frame (1ms) rate. It occurs only when serving eNBs detect increased NACKs on a specific cell edge UE. Thus, invention embodiments are only carried out to resolve conflicts once they have occurred.

In the case of a conflict, the allocated sub-band notification would be communicated to all the neighbour eNBs over S1. Then the eNBs will react as per the current eNB priority list. The highest priority eNB will check if the allocation is within its cell edge and then change the allocation if it is present. This will improve the error rate and reduce the NACKs. If this eNB does not share the same sub-band at cell edge, the next priority eNB will witness the continuation of NACKs and check its allocations and so on.

Having this implicit eNB priority list helps to reduce the communications on the S1 link and enables direct response from the concerned neighbour eNB to the collision issue. Using the eNB priority also prevents more than one eNB responding to the alert and increased NACKs and changing their bands, which can cause further conflict. It is fair for the eNB with highest allocation priority to step in to change the sub-bands first, if required.

Figure 5 is a flowchart of a LTE embodiment of the invention. In step S100 the eNB priority status is communicated amongst the eNBs. This priority status will remain constant for the CQI period. The sharing of Zadoff-Chu spreading codes is implemented.

In step S110 the eNBs exchange the C-RNTI (cell radio network temporary identifier) for any newly active UEs in each eNBs cell.

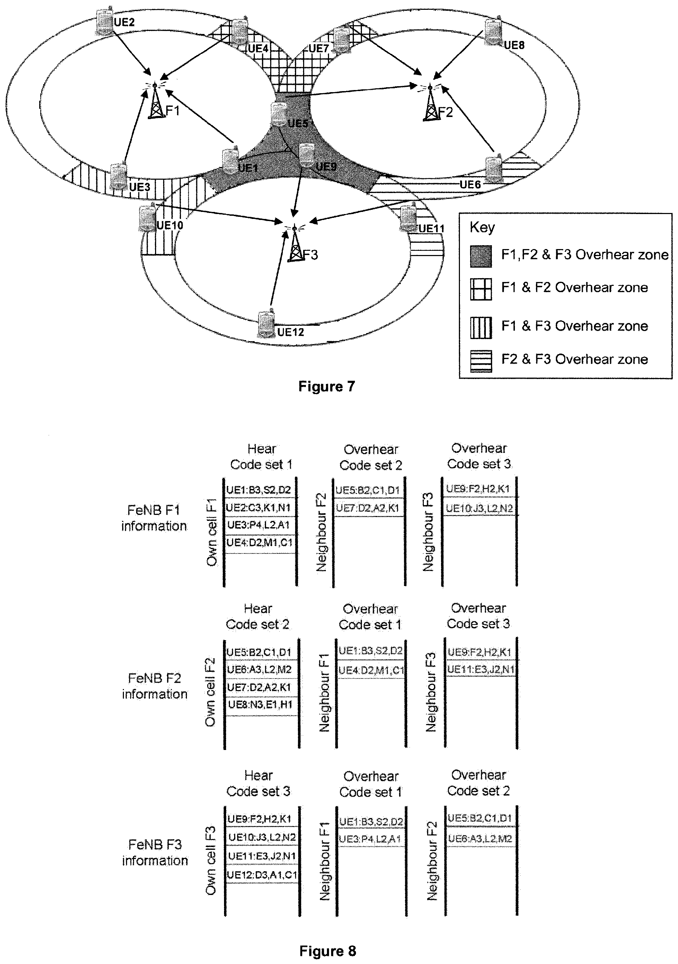

In step S120 the information overheard at each eNB is collected (de-scrambled and decoded). This allows each eNB to analyse the sub-band requests from its own cell-edge UEs and from the overheard CQI requests outside the cell in step S130 and subsequently in step S140 to assign sub-bands. The assignment is based on the higher cell-edge MCS between two or more UEs and on the current eNB priority to mitigate any conflicts. Each eNB will keep records of the UEs on which it has information; the eNB, the sub-band and the MCS, as shown in Figure 8, for example.

In step S150 each eNB continues to overhear the uplink control channel PUCCH and particularly listens to HARQ information in the form of ACKs and NACKs sent to base stations in neighbouring cells. In step S160, if the base station overhears increased NACKs from the neighbouring cell and receives an interfered sub-band notification relating to a UE of a neighbouring cell in step S160, it will change a similar sub-band allocation or allocations in its own cell-edge UE in step S170. Once the similar sub-band allocation has been changed (if that is the case) or if in fact there has been no notification of interfered sub-band received, the base station will continue overhearing HARQ information until the next CQI reporting period, in step S180. The base station will also record any new C-RNTI information over the S1 link to the core network.

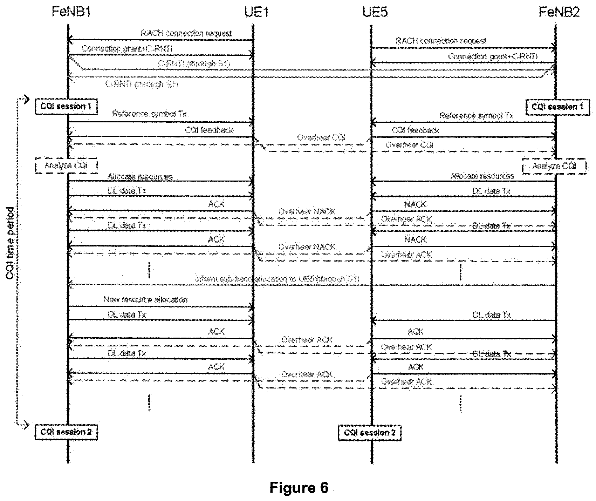

An embodiment shown in Figure 6 example will now be discussed. Shown in this example are two base stations, FeNB1 and FeNB2, with one UE in each cell, UE1 and UE5. UE1 is served by the first BS, FeNB1, and UE5 is served by the second BS, FeNB2. The figure illustrates the direct communications between each BS and the UE in its cell, the overhearing information between each BS and the UE in the other cell and the communications between the two BSs in this embodiment. It should be noted that this simple example serves to demonstrate when and by what means communications occur in an embodiment. Other UEs are involved, but are not shown.

Initial communications at the top of the figure show each UE requesting to connect with the BS serving the cell within which it is located, i.e. UE1 to FeNB1 and UE5 to FeNB2. Each BS then accepts the connection request and assigns a C-RNTI encryption identifier to the UE in its cell. Over the S1 communication link, the two BSs exchange the C-RNTI identifiers for the UEs in their cell, so that each BS is able to decrypt the UE information for the neighbouring cell. The example then moves to the start of the first CQI session where each BS receives in-cell uplink control information from the UE in its cell and overhears the uplink control information from the UE in the other cell. This information is analysed by each BS and then used to allocate resources to the UE in its cell.

The known resource requests of the UE in a BS's cell and the overheard resource requests of a UE in a neighbouring cell should, in most cases, provide the BS with enough information to efficiently allocate resources so that there is no interference to either UE. However in some situations, such as this example, overhearing alone cannot provide the effective allocation of resources and BSs allocate resources, including sub-bands, that will cause conflict or interference to one or more UEs. For example, in the arrangement shown, FeNB2 may not be able to hear UE1 uplink transmission and thus conflicting resources may be allocated.

It can be seen from Figure 6 that when this occurs, one of the UEs exhibits an increase in NACKs as a result of the interference. In this example, due to its location, UE5 receives strong interference from FeNB1 (the neighbour) and returns NACKs for the DL data packets to FeNB2. This increase in NACKs is also overheard by FeNB1, which indicates to the BS that there is a problem and that it will most likely need to reallocate resources to a UE in its cell, in this case UE1. As a result of UE5 returning an increased number of NACKs, FeNB2 (the serving cell) sends an alert over the S1 communication link to FeNB1 to inform the first BS of the sub-band allocation of interfered UE5. FeNB1 can then check its allocations and reallocate resources to the conflicting UE, UE1, so that there is no longer a conflict with UE5. Once the reallocation has occurred, both BSs continue to communicate with the UE in their cell.

Both eNBs monitor the ACKs (on PUCCH) for DL data transmission thereafter, until the next scheduled session. The CQI period (around 128ms) considered is significantly longer than the DL transmission intervals (sub-frame based) of 1 ms. The allocations are unlikely to change unless an interference event is reported by the eNB, over S1. The communications over S1 occur at a much slower rate than resource allocation and ACK/NACK transmissions (at the rate of 1ms granularity in LTE).

An embodiment shown in the example in Figures 7 and 8 will now be explained. This example shows a total of twelve user equipments (UE1 to UE12) served by the three cells of the three base stations (FeNB F1 to FeNB F3). Figure 8 shows the band preferences of each UE, the priority of each band preference, the cell in which each UE is located and which UEs of the neighbouring cells each BS can overhear. Figure 7 diagrammatically displays an arrangement of cells and UEs which could lead to the information shown in Figure 8.

In this example, it can be seen that UE1 to UE4 are served by F1, UE5 to UE8 are served by F2 and UE9 to UE12 are served by F3. F1 can overhear UE5 and UE7 from the second cell and UE9 and UE10 from the third cell. F2 can overhear UE1 and UE4 from the first cell and UE9 and UE11 from the third cell. F3 can overhear UE1 and UE3 from the first cell and UE5 and UE6 from the second cell. Thus not all UEs can be heard by all BSs. The three combinations of a letter and a number listed next to each UE shows the UE's priority for the band and the band preferences of that UE in an ordered set of preferences, starting with the highest preference/priority. For example, UE1 has sub-band B, with a priority of 3 as its first choice, a second choice of sub-band S, priority 2 and third choice of sub-band D, priority 2.

Table 1 below displays the band allocation of each UE in this example after overhearing, how the allocations were determined and whether the allocations cause conflict with any other UEs. Starting with F1, the allocation of resources is discussed below.

**Table 1: Sub-band allocation summary for the example scenario**

| **FeNB** | **Served UE** | **Allocation** | **Reason** |
|---|---|---|---|
| F1 | UE1 | B | Highest MCS within own and overheard UEs |
| | UE2 | C | Highest MCS in own set. No overheard conflict |
| | UE3 | P | Best sub-band. No known conflict |
| | UE4 | D | Conflicting MCS but F1 has allocation priority |
| F2 | UE5 | C | Second choice sub-band. Request by UE2 on same sub-band not overheard. Will cause conflict. |
| | UE6 | A | No conflict on available data |
| | UE7 | K | First two choices known to be allocated elsewhere. Third choice sub-band with no known conflict. |
| | UE8 | N | Best sub-band. No known conflict |
| F3 | UE9 | F | Best sub-band. No known conflict |
| | UE10 | J | Best sub-band. No known conflict |
| | UE11 | E | Best sub-band. No known conflict |
| | UE12 | D | No known conflict but allocated by F1 also for UE4. But will not cause interference. |

UE1 has been allocated its first preference sub-band, B. Of the UEs served by and overheard by F1, there is one other UE requesting sub-band B, UE5. However, UE1 has a higher priority over UE5 (B3 and B2, respectively) and so is allocated the sub-band. All other UEs served by F1 are also allocated their first preference sub-band, following the same process described for UE1.

Looking now at the UEs served by F2, UE5 has been allocated sub-band C, its second preference sub-band. UE5 and UE1 are heard and overheard, respectively, by the BS (F2) and both request sub-band B. However, as discussed previously, UE1 has the higher priority and is consequently allocated sub-band B. UE5 has to therefore move to its second choice, sub-band C. There are no other UEs that are served by F2 or are in F2's overhear zone that have a higher priority request for sub-band C and so it is allocated to UE5. Yet, as is shown in the Table, sub-band C is also allocated to UE2 in the first cell. The sub-band request of UE2 is not known to F2 since UE2 is not in the overhear zone of F2. This is why the double allocation of sub-band C has occurred. The next thing to consider is whether or not the allocation of sub-band C to both UE2 and UE5 will cause conflict and interference. In order for UE5 to receive interference from F1, it must be located in F1's overhear zone. As can be seen from the Table above, and from Figures 7 and 8, UE5 is in the overhear zone of F1 and so the double allocation of sub-band C will cause interference. According to an embodiment, as a result of the interference, F2 would hear an increase in NACKs from UE5, which would also be overheard by F1 and F3. F2 would therefore alert the neighbour FeNBs to the interference and notify them of the sub-band allocated to UE5. F1 would then be aware of the allocation conflict between UE2 and UE5 and can reallocate resources accordingly, as explained in more detail later.

Of the other UEs served by F2, UE6 and UE8 are allocated their first choice sub-bands. This is because they have the highest priorities of these sub-bands of all the UEs that are in the cell and those that are overheard by F2. UE7 is allocated its third choice sub-band preference since the first two preferences are allocated to UEs with higher priorities, UE4 (which has a higher priority serving BS) and UE6 (which has a higher UE/band priority).

Finally, the UEs in the third cell, served by F3, are all allocated their first choice sub-band allocations. Again, this is due to each UE having the highest priority of their particular first choice sub-band of all the UEs in the cell and of those that are overheard by F3 (or they are the only requester).

Looking at the allocation of the sub-bands in the other cells, it can be seen that there is a potential conflict between the resources allocated to UE12 and UE4, since they have both been allocated sub-band D. According to an embodiment, the double allocation of sub-band D will only cause interference to one of the UEs if that particular UE is in the overhear zone of the FeNB which serves the other UE, to which the same sub-band has been allocated, i.e. the double allocation of sub-band D will only cause conflict if UE12 is in the overhear zone of F1 or UE4 is in the overhear zone of F3. As can be seen from Figures 7 and 8, neither UE is in the overhear zone of the BS which serves the other UE and so there is no conflict or interference. As a result, there would be no increase in NACKs from either UE and so there would be no need for an alert to be sent from one BS to the neighbour BSs.

There remains the allocation conflict between UE2 in F1 and UE5 in F2. In order to resolve the conflict, F1 will look at the other allocation options for UE2, which are sub-bands K and N. F1 has overheard that band K can be used as the third preference in UE7. Since F2 is of lower priority than F1, the band D (UE7's first preference) has already been used by F1. Moreover, band A (UE7's second preference) could have also been allocated elsewhere. Hence F1 decides not to change the UE2 allocation to K, (UE2's second choice) because it assumes that band will have been allocated to UE7. Therefore F1 changes UE2's allocation to N, which is the last in UE2's preferred list. Although band N features in UE10's list, none of the higher subband preferences for UE10 (J or L) appear to be conflicting, as far as F1 can see. In this case allocation of sub-band N resolves the conflict. If F1 could not find a suitable allocation band, it could request UE2 to provide further preferred bands in the next CQI period.

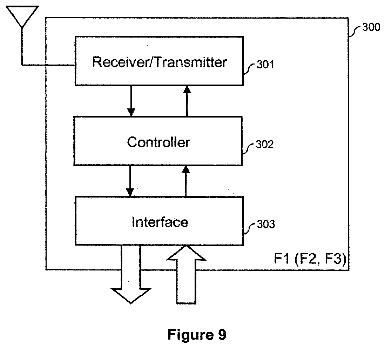

Figure 9 shows a base station that has the functionality to carry out the method of an embodiment of the invention. The base station (300) comprises a receiver/transmitter (301), a controller (302) and an interface (303). The receiver/transmitter could be any device with the capability to transmit and receive data over an air interface, such as a transceiver or it could include two separate devices. The receiver/transmitter is used for sending signals over the air interface, such as the uplink and downlink communications to user equipments in the cell and for overhearing user equipments in neighbouring cells.

The controller may be any device that is capable of analysing data and allocating resources accordingly, such as a processor. The controller is responsible for assigning sub-band allocation using the in-cell uplink control information and the overheard uplink control information. The controller is also responsible for analysing any alerts from neighbouring cells to determine whether any sub-band allocations are causing any interference and adjusting the sub-band allocation as necessary.

The interface is to the communication link(s) with the neighbouring base stations core network. In the diagram it is shown as a hardware interface and could connect to any inter-cell communication link such as S1 or X2. The interface could also be provided by the receiver/transmitter as an air interface or by any other interface that allows for such communications. The interface is responsible for inter-cell communications, i.e. communications to neighbouring cells. This could include, inter alia, receiving and transmitting alerts and user equipment identifier encryption information.

### Summary

Invention embodiments proposal use both an overhearing feature and an inter-cell communications feature in a novel way to co-ordinate resource allocations between neighbouring cells. The neighbour cells can overhear (in the uplink) the requested resource allocations by other cells' cell edge users and adapt their own cell edge allocations to avoid interference. For the few cell edge UEs whose transmissions are not overheard by the neighbours, resource collisions and interference can occur. The solution provides a methodology for resolving these collisions, with minimal communication amongst the eNBs over existing links. Invention embodiments are described for an LTE based network, but the methodology can be applied to any other wireless communication system which provides split time/frequency resources amongst cells. Also it can be applied to any kind of co-existing cells, from larger Macro cells to Femto cell networks.

One main benefit of invention embodiments is that cell edge interference can be reduced with the use of existing links between the base stations (cells). In LTE the S1 and X2 (logical) links are defined for inter-cell communication. The X2 link needs to be much faster and hence it is costlier to implement, especially in low cost, plug and play deployments like Femto-cells. Under LTE specifications, X2 links are required to operate known Inter-Cell Interference Co-ordination (ICIC) techniques. Invention embodiments can alleviate the need to have fast X2 links, but achieve near ICIC performance by using overhearing and slower S1 links. This can reduce the product and deployment cost of Femto cell networks, while still improving cell edge performance. It can be applied to other cells, like rural Macro cells for example, where provision of high speed X2 links may be difficult.

## Claims

1. A radio resource allocation method, for use in a cellular wireless communication system with a plurality of base stations (F1, F2, F3) configured to share sub-band allocations amongst a plurality of user equipments of the system and comprising a first base station (F1) providing a first cell and a second base station (F2) providing a second cell, in which method the first base station (F1) carries out the process of:
receiving in-cell uplink control information from one or more user equipments served by the first cell and overhearing uplink control information transmitted from one or more user equipments served by the second cell to the second base station;
assigning a sub-band allocation taking the in-cell uplink control information and overheard uplink control information into account; **characterised by**
receiving an alert from the second base station as to a particular user equipment sub-band allocation in the second cell with which first base station (F1) transmission is interfering; wherein the first base station transmission causing interference is transmission to a user equipment in a position where the user equipment's uplink control information transmission cannot be overheard by the second base station;
using the overheard uplink control information and in-cell uplink control information and alert to adjust the sub-band allocation in the first base station (F1) cell.

2. A radio resource allocation method according to claim 1, including the first base station sending a per-session identifier to the second base station, for example C-RNTI in an LTE system, for each user equipment served by the first cell and receiving identifiers for each user equipment served by the second cell.

3. A radio resource allocation method according to claim 1 or 2, wherein the first base station and second base station are two base stations in a cluster of two or more collaborating base stations, and wherein a set of spreading codes identifying transmissions in each cell, such as Zadoff-Chu spreading codes in an LTE system, are shared between the base stations.

4. A radio resource allocation method according to any of the preceding claims, wherein the first base station also overhears uplink control messages relating to failed downlink reception from the particular UE with which the first base station transmission is interfering, for example NACK messages in an LTE system, and prepares to adjust the sub-band allocation.

5. A radio resource allocation method according to any of the preceding claims, wherein the alert is received over a link to a core network of the communication system, preferably over the S1 link to the evolved packet core in an LTE system.

6. A radio resource allocation method according to any of the preceding claims, wherein time/frequency resource blocks are scheduled for uplink transmission by the user equipments and/or downlink transmission to the user equipments within the sub-band allocations.

7. A radio resource allocation method according to any of the preceding claims, wherein the sub-band allocations take into account user equipment priorities of user equipments of the system to mitigate any potential sub-band allocation conflicts.

8. A radio resource allocation method according to any of the preceding claims, wherein the overheard uplink control information and in-cell uplink control information include an ordered set of sub-band requests from each user equipment overheard or served by the first cell.

9. A radio resource allocation method according to claims 7 and 8, wherein each sub-band request includes a user equipment priority per sub-band, preferably in the form of an indication of a potential data rate for each sub-band request in the ordered set, more preferably as a modulation and coding scheme MCS in an LTE system.

10. A radio resource allocation method according to any of the preceding claims, wherein the sub-band allocations take into account a cell priority order of cells within the communication system.

11. A radio resource allocation method according to claim 10, wherein the cell priority order determines the way in which the sub-bands are allocated when there is a conflict between uplink control information from user equipments in different cells, and preferably wherein the cell priority order is a rotating priority, which more preferably changes with each CQI period in an LTE system.

12. A radio resource allocation method, for use in a cellular wireless communication system with a plurality of base stations (F1, F2, F3) configured to share sub-band allocations amongst a plurality of user equipments of the system and comprising a first base station (F1) providing a first cell and a second base station (F2) providing a second cell, in which method the second base station (F2) carries out the process of:
receiving in-cell uplink control information from one or more user equipments served by the second cell and overhearing uplink control information transmitted from one or more user equipments served by the first cell to the first base station and assigning sub-band allocations to the user equipments in the second cell in dependence upon the in-cell and overheard uplink control information;
receiving uplink control messages from a particular user equipment served by the second cell and having an interfered sub-band allocation, the uplink control messages being related to failed reception of downlink transmission to the particular user equipment; **characterised by**
sending an alert as to the interfered user equipment sub-band allocation to the first base station (F1) to allow the first base station to adjust the sub-band allocations in the first base station (F1) cell wherein the first base station transmission causing interference is transmission to a user equipment in a position where the user equipment's uplink control information transmission cannot be overheard by the second base station.

13. A radio resource allocation method, for use in a cellular wireless communication system with a plurality of base stations (F1, F2, F3) configured to share sub-band allocations amongst a plurality of user equipments of the system, each base station also configured to provide its own cell, in which method the system carries out the process of:
the base stations receiving in-cell uplink control information from one or more user equipments served by their own cell and overhearing uplink control information transmitted from one or more user equipments served by the cell of the one or more other base stations;
the base stations assigning sub-band allocations to the one or more user equipments in their own cell, taking the in-cell and overheard uplink control information into account; **characterised by**
one base station sending an alert as to a particular user equipment sub-band allocation with which another base station transmission is interfering wherein the other base station transmission causing interference is transmission to a user equipment in a position where the user equipment's uplink control information transmission cannot be overheard by the base station in question; and
the other base station using its in-cell uplink control information, overheard uplink control information and alert to adjust a sub-band allocation in its own cell.

14. A first base station in a cellular wireless communication system with a plurality of base stations (F1, F2, F3) configured to share sub-band allocations amongst a plurality of user equipments of the system, the first base station (F1) providing a first cell and a second base station (F2) providing a second cell, the first base station (F1) comprising:
a receiver configured to receive in-cell uplink control information from one or more user equipments served by the first cell and to overhear uplink control information transmitted from one or more user equipments served by the second cell to the second base station;
a controller configured to assign a sub-band allocation taking the in-cell uplink control information and overheard uplink control information into account; **characterised by**
an interface configured to receive an alert from the second base station as to a particular user equipment sub-band allocation in the second cell with which first base station (F1) transmission is interfering; wherein the first base station transmission causing interference is transmission to a user equipment in a position where the user equipment's uplink control information transmission cannot be overheard by the second base station; and wherein
the controller is configured to use the overheard uplink control information and in-cell uplink control information and alert to adjust the sub-band allocation in the first base station (F1) cell.

15. A second base station in a cellular wireless communication system with a plurality of base stations (F1, F2, F3) configured to share sub-band allocations amongst a plurality of user equipments of the system, a first base station (F1) providing a first cell and the second base station (F2) providing a second cell, the second base station (F2) comprising:
a receiver configured to receive in-cell uplink control information from one or more user equipments served by the second cell and to overhear uplink control information transmitted from one or more user equipments served by the first cell to the first base station;
a controller configured to assign sub-band allocations to the user equipments in the second cell in dependence upon the in-cell and overheard uplink control information; **characterised in that**
the receiver is configured to receive uplink control messages from a particular user equipment served by the second cell and having an interfered sub-band allocation, the uplink control messages being related to failed reception of downlink transmission to the particular user equipment; and further comprising an interface configured to send an alert as to the interfered user equipment sub-band allocation to the first base station (F1) to allow the first base station to adjust the sub-band allocations in the first cell wherein the first base station transmission causing interference is transmission to a user equipment in a position where the user equipment's uplink control information transmission cannot be overheard by the second base station.

16. A cellular wireless communication system with a plurality of base stations (F1, F2, F3) configured to share sub-band allocations amongst a plurality of user equipments of the system and each configured to provide a cell, wherein:
the base stations include receivers configured to receive in-cell uplink control information from one or more user equipments served by their own cell and to overhear uplink control information transmitted from one or more user equipments served by the cell of the one or more other base stations;
the base stations include controllers configured to assign sub-band allocations to the one or more user equipments in their own cell, taking the in-cell and overheard uplink control information into account; **characterised in that**
the base stations include an interface configured to send an alert as to a particular user equipment sub-band allocation in their own cell with which other base station transmission is interfering wherein the other base station transmission causing interference is transmission to a user equipment in a position where the user equipment's uplink control information transmission cannot be overheard by the base station in question; and wherein
the base station controllers are configured to use the in-cell and overheard uplink control information and alert to adjust a sub-band allocation in their own cell.

## Patentansprüche

1. Funkressourcenzuweisungsverfahren zur Verwendung in einem Mobilfunksystem mit mehreren Basisstationen (F1, F2, F3), die konfiguriert sind, Teilbandzuweisungen unter mehreren Anwendergeräten des Systems gemeinsam zu benutzen, und umfassend eine erste Basisstation (F1), die eine erste Zelle bereitstellt, und eine zweite Basisstation (F2), die eine zweite Zelle bereitstellt, wobei in dem Verfahren die erste Basisstation (F1) folgenden Prozess ausführt:
Empfangen zellinterner Aufwärtsstreckensteuerinformationen von einem oder mehreren Anwendergerät(en), die von der ersten Zelle bedient werden, und Mithören von Aufwärtsstreckensteuerinformationen, die von einem oder mehreren Anwendergerät(en), die von der zweiten Zelle bedient werden, zur zweiten Basisstation gesendet werden;
Zuordnen einer Teilbandzuweisung unter Berücksichtigung der zellinternen Aufwärtsstreckensteuerinformationen und mitgehörten Aufwärtsstreckensteuerinformationen; **gekennzeichnet durch**
Empfangen einer Warnung von der zweiten Basisstation bezüglich einer bestimmten Anwendergerät-Teilbandzuweisung in der zweiten Zelle, mit welcher die Sendung der ersten Basisstation (F1) interferiert; wobei die Sendung der ersten Basisstation, die eine Interferenz verursacht, eine Sendung zu einem Anwendergerät an einer Position ist, wo die Sendung der Aufwärtsstreckensteuerinformationen des Anwendergeräts von der zweiten Basisstation nicht mitgehört werden kann;
Verwenden der mitgehörten Aufwärtsstreckensteuerinformationen und zellinternen Aufwärtsstreckensteuerinformationen und Warnung zum Einstellen der Teilbandzuweisung in der Zelle der ersten Basisstation (F1).

2. Funkressourcenzuweisungsverfahren nach Anspruch 1, enthaltend, dass die erste Basisstation eine Kennung pro Sitzung zur zweiten Basisstation, zum Beispiel C-RNTI in einem LTE-System, für jedes Anwendergerät, das von der ersten Zelle bedient wird, sendet und für jedes Anwendergerät, das von der zweiten Zelle bedient wird, Kennungen empfängt.

3. Funkressourcenzuweisungsverfahren nach Anspruch 1 oder 2, wobei die erste Basisstation und die zweite Basisstation zwei Basisstationen in einem Cluster von zwei oder mehr zusammenarbeitenden Basisstationen sind, und wobei ein Satz von Spreizcodes, die Sendungen in jeder Zelle identifizieren, wie Zadoff-Chu Spreizcodes in einem LTE-System, von den Basisstationen gemeinsam benutzt wird.

4. Funkressourcenzuweisungsverfahren nach einem der vorangehenden Ansprüche, wobei die erste Basisstation auch Aufwärtsstreckensteuernachrichten mithört, die sich auf einen fehlgeschlagenen Abwärtsstreckenempfang von dem bestimmten UE beziehen, mit dem die Sendung der ersten Basisstation interferiert, zum Beispiel NACK-Nachrichten in einem LTE-System, und Vorbereitungen trifft, die Teilbandzuweisung einzustellen.

5. Funkressourcenzuweisungsverfahren nach einem der vorangehenden Ansprüche, wobei die Warnung über eine Verbindung zu einem Kernnetzwerk des Kommunikationssystems empfangen wird, vorzugsweise über die S1-Verbindung zum entwickelten Paketkern in einem LTE-System.

6. Funkressourcenzuweisungsverfahren nach einem der vorangehenden Ansprüche, wobei Zeit/Frequenz-Ressourcenblöcke zur Aufwärtsstreckensendung durch die Anwendergeräte und/oder Abwärtsstreckensendung zu den Anwendergeräten innerhalb der Teilbandzuweisungen geplant sind.

7. Funkressourcenzuweisungsverfahren nach einem der vorangehenden Ansprüche, wobei die Teilbandzuweisungen Anwendergerätprioritäten von Anwendergeräten des Systems berücksichtigen, um mögliche Teilbandzuweisungskonflikte zu mildern.

8. Funkressourcenzuweisungsverfahren nach einem der vorangehenden Ansprüche, wobei die mitgehörten Aufwärtsstreckensteuerinformationen und zellinternen Aufwärtsstreckensteuerinformationen einen gereihten Satz von Teilbandanforderungen von jedem Anwendergerät enthalten, das abgehört oder von der ersten Zelle bedient wird.

9. Funkressourcenzuweisungsverfahren nach Ansprüchen 7 und 8, wobei jede Teilbandanforderung eine Anwendergerätpriorität pro Teilband enthält, vorzugsweise in der Form einer Angabe einer möglichen Datenrate für jede Teilbandanforderung in dem gereihten Satz, bevorzugter als eine Modulation und ein Codierungsschema MCS in einem LTE-System.

10. Funkressourcenzuweisungsverfahren nach einem der vorangehenden Ansprüche, wobei die Teilbandzuweisungen eine Zellprioritätsreihenfolge von Zellen innerhalb des Kommunikationssystems berücksichtigen.

11. Funkressourcenzuweisungsverfahren nach Anspruch 10, wobei die Zellprioritätsreihenfolge die Art bestimmt, in welcher die Teilbänder zugewiesen werden, wenn ein Konflikt zwischen Aufwärtsstreckensteuerinformationen von Anwendergeräten in verschiedenen Zellen besteht, und wobei vorzugsweise die Zellprioritätsreihenfolge eine rotierende Priorität ist, die sich bevorzugter mit jeder CQI-Periode in einem LTE-System ändert.

12. Funkressourcenzuweisungsverfahren zur Verwendung in einem Mobilfunksystem mit mehreren Basisstationen (F1, F2, F3) die konfiguriert sind, Teilbandzuweisungen unter mehreren Anwendergeräten des Systems gemeinsam zu benutzen, und umfassend eine erste Basisstation (F1), die eine erste Zelle bereitstellt und eine zweite Basisstation (F2), die eine zweite Zelle bereitstellt, wobei in dem Verfahren die zweite Basisstation (F2) folgenden Prozess ausführt:
Empfangen zellinterner Aufwärtsstreckensteuerinformationen von einem oder mehreren Anwendergerät(en), die von der zweiten Zelle bedient werden, und Mithören von Aufwärtsstreckensteuerinformationen, die von einem oder mehreren Anwendergerät(en) gesendet werden, die von der ersten Zelle bedient werden, zur ersten Basisstation und Zuordnen von Teilbandzuweisungen zu den Anwendergeräten in der zweiten Zelle abhängig von den zellinternen und mitgehörten Aufwärtsstreckensteuerinformationen;
Empfangen von Aufwärtsstreckensteuernachrichten von einem bestimmten Anwendergerät, das von der zweiten Zelle bedient wird, und mit einer interferierten Teilbandzuweisung, wobei sich die Aufwärtsstreckensteuernachrichten auf einen fehlgeschlagenen Empfang der Abwärtsstreckensendung zu dem bestimmten Anwendergerät beziehen; **gekennzeichnet durch**
Senden einer Warnung bezüglich der interferierten Anwendergerät-Teilbandzuweisung zur ersten Basisstation (F1), um der ersten Basisstation zu erlauben, die Teilbandzuweisungen in der Zelle der ersten Basisstation (F1) einzustellen, wobei die Sendung der ersten Basisstation, die eine Interferenz verursacht, eine Sendung zu einem Anwendergerät an einer Position ist, wo die Sendung der Aufwärtsstreckensteuerinformationen des Anwendergeräts von der zweiten Basisstation nicht mitgehört werden kann.

13. Funkressourcenzuweisungsverfahren zur Verwendung in einem Mobilfunksystem mit mehreren Basisstationen (F1, F2, F3) die konfiguriert sind, Teilbandzuweisungen unter mehreren Anwendergeräten des Systems gemeinsam zu benutzen, wobei jede Basisstation auch konfiguriert ist, ihre eigene Zelle bereitzustellen, wobei in dem Verfahren das System den folgenden Prozess ausführt:
Empfangen durch die Basisstationen zellinterner Aufwärtsstreckensteuerinformationen von einem oder mehreren Anwendergerät(en), die von ihrer eigenen Zelle bedient werden, und Mithören von Aufwärtsstreckensteuerinformationen, die von einem oder mehreren Anwendergerät(en) gesendet werden, die von der Zelle der einen oder mehreren anderen Basisstation(en) bedient werden;
Zuordnen durch die Basisstationen von Teilbandzuweisungen zu dem einen oder den mehreren Anwendergeräten in ihrer eigenen Zelle unter Berücksichtigung der zellinternen und mitgehörten Aufwärtsstreckensteuerinformationen; **gekennzeichnet durch**
Senden **durch** eine Basisstation einer Warnung bezüglich einer bestimmten Anwendergerät-Teilbandzuweisung mit welcher eine Sendung einer anderen Basisstation interferiert, wobei die Sendung der anderen Basisstation, die eine Interferenz verursacht, eine Sendung zu einem Anwendergerät an einer Position ist, wo die Sendung der Aufwärtsstreckensteuerinformationen des Anwendergeräts von der fraglichen Basisstation nicht mitgehört werden kann; und
Verwenden **durch** die andere Basisstation ihrer zellinternen Aufwärtsstreckensteuerinformationen, mitgehörten Aufwärtsstreckensteuerinformationen und Warnung, um eine Teilbandzuweisung in ihrer eigenen Zelle einzustellen.

14. Erste Basisstation in einem Mobilfunksystem mit mehreren Basisstationen (F1, F2, F3), die konfiguriert sind, Teilbandzuweisungen unter mehreren Anwendergeräten des Systems gemeinsam zu benutzen, wobei die erste Basisstation (F1) eine erste Zelle bereitstellt und eine zweite Basisstation (F2) eine zweite Zelle bereitstellt, wobei die erste Basisstation (F1) umfasst:
einen Empfänger, der konfiguriert ist, zellinterne Aufwärtsstreckensteuerinformationen von einem oder mehreren Anwendergerät(en) zu empfangen, die von der ersten Zelle bedient werden, und Aufwärtsstreckensteuerinformationen mitzuhören, die von einem oder mehreren Anwendergerät(en), die von der zweiten Zelle bedient werden, zur zweiten Basisstation gesendet werden;
eine Steuerung, die konfiguriert ist, eine Teilbandzuweisung unter Berücksichtigung der zellinternen Aufwärtsstreckensteuerinformationen und mitgehörten Aufwärtsstreckensteuerinformationen zuzuordnen; und
eine Schnittstelle, die konfiguriert ist, eine Warnung von der zweiten Basisstation bezüglich einer bestimmten Anwendergerät-Teilbandzuweisung in der zweiten Zelle zu empfangen, mit welcher die Sendung der ersten Basisstation (F1) interferiert, wobei die Sendung der ersten Basisstation, die eine Interferenz verursacht, eine Sendung zu einem Anwendergerät an einer Position ist, wo die Sendung der Aufwärtsstreckensteuerinformationen des Anwendergeräts von der zweiten Basisstation nicht mitgehört werden kann; und wobei
die Steuerung konfiguriert ist, die mitgehörten Aufwärtsstreckensteuerinformationen und zellinterner Aufwärtsstreckensteuerinformationen und Warnung zum Einstellen der Teilbandzuweisung in der Zelle der ersten Basisstation (F1) zu verwenden.

15. Zweite Basisstation in einem Mobilfunksystem mit mehreren Basisstationen (F1, F2, F3), die konfiguriert sind, Teilbandzuweisungen unter mehreren Anwendergeräten des Systems gemeinsam zu benutzen, wobei eine erste Basisstation (F1) eine erste Zelle bereitstellt und die zweite Basisstation (F2) eine zweite Zelle bereitstellt, wobei die zweite Basisstation (F2) umfasst:
einen Empfänger, der konfiguriert ist, zellinterne Aufwärtsstreckensteuerinformationen von einem oder mehreren Anwendergerät(en) zu empfangen, die von der zweiten Zelle bedient werden, und Aufwärtsstreckensteuerinformationen mitzuhören, die von einem oder mehreren Anwendergerät(en), die von der ersten Zelle bedient werden, zur ersten Basisstation gesendet werden;
eine Steuerung, die konfiguriert ist, Teilbandzuweisungen zu den Anwendergeräten in der zweiten Zelle abhängig von den zellinternen und mitgehörten Aufwärtsstreckensteuerinformationen zuzuordnen; **dadurch gekennzeichnet, dass**
der Empfänger konfiguriert ist, Aufwärtsstreckensteuernachrichten von einem bestimmten Anwendergerät zu empfangen, das von der zweiten Zelle bedient wird und eine interferierte Teilbandzuweisung hat, wobei sich die Aufwärtsstreckensteuernachrichten auf einen fehlgeschlagenen Empfang einer Abwärtsstreckensendung zu dem bestimmten Anwendergerät beziehen; und ferner umfassend
eine Schnittstelle, die konfiguriert ist, eine Warnung bezüglich der interferierten Anwendergerät-Teilbandzuweisung an die erste Basisstation (F1) zu senden, um der ersten Basisstation zu erlauben, die Teilbandzuweisungen in der ersten Zelle einzustellen, wobei die Sendung der ersten Basisstation, die eine Interferenz verursacht, eine Sendung zu einem Anwendergerät an einer Position ist, wo die Sendung der Aufwärtsstreckensteuerinformationen des Anwendergeräts von der zweiten Basisstation nicht mitgehört werden kann.

16. Mobilfunksystem mit mehreren Basisstationen (F1, F2, F3), die konfiguriert sind, Teilbandzuweisungen unter mehreren Anwendergeräten des Systems gemeinsam zu benutzen, und jede konfiguriert ist, eine Zelle bereitzustellen, wobei:
die Basisstationen Empfänger enthalten, die konfiguriert sind, zellinterne Aufwärtsstreckensteuerinformationen von einem oder mehreren Anwendergerät(en) zu empfangen, die von ihrer eigenen Zelle bedient werden, und Aufwärtsstreckensteuerinformationen mitzuhören, die von einem oder mehreren Anwendergerät(en) gesendet werden, die von der Zelle der einen oder mehreren anderen Basisstation(en) bedient werden;
die Basisstationen Steuerungen enthalten, die konfiguriert sind, Teilbandzuweisungen zu dem einen oder den mehreren Anwendergerät(en) in ihrer eigenen Zelle unter Berücksichtigung der zellinternen und mitgehörten Aufwärtsstreckensteuerinformationen zuzuordnen; **dadurch gekennzeichnet, dass**
die Basisstationen eine Schnittstelle enthalten, die konfiguriert ist, eine Warnung bezüglich einer bestimmten Anwendergerät-Teilbandzuweisung in ihrer eigenen Zelle, mit welcher eine Sendung einer anderen Basisstation interferiert, zu senden, wobei die Sendung der anderen Basisstation, die eine Interferenz verursacht, eine Sendung zu einem Anwendergerät an einer Position ist, wo die Sendung der Aufwärtsstreckensteuerinformationen des Anwendergeräts von der fraglichen Basisstation nicht mitgehört werden kann; und wobei
die Steuerungen der Basisstation konfiguriert sind, die zellinternen und mitgehörten Aufwärtsstreckensteuerinformationen und Warnung zum Einstellen einer Teilbandzuweisung in ihrer eigenen Zelle zu verwenden.

## Revendications

1. Procédé d'affectation de ressources radio à utiliser dans un système de communication sans fil cellulaire avec une pluralité de stations de base (F1, F2, F3) configurée de manière à partager des affectations de sous-bandes entre une pluralité d'équipements d'utilisateur du système, et comprenant une première station de base (F1) fournissant une première cellule et une seconde station de base (F2) fournissant une seconde cellule, dans lequel procédé, la première station de base (F1) met en oeuvre le processus consistant à :
recevoir des informations de commande de liaison montante intracellulaires en provenance d'un ou plusieurs équipements d'utilisateur desservis par la première cellule et écouter des informations de commande de liaison montante transmises à partir d'un ou plusieurs équipements d'utilisateur desservis par la seconde cellule, à la seconde station de base ;
affecter une affectation de sous-bande en tenant compte des informations de commande de liaison montante intracellulaires et des informations de commande de liaison montante écoutées ; **caractérisé par** les étapes ci-dessous consistant à :
recevoir une alerte en provenance de la seconde station de base concernant une affectation de sous-bande d'équipement d'utilisateur spécifique dans la seconde cellule avec laquelle la transmission de la première station de base (F1) interfère ; dans lequel la transmission de la première station de base occasionnant un brouillage est une transmission à un équipement d'utilisateur dans une position où la transmission d'informations de commande de liaison montante de l'équipement d'utilisateur ne peut pas être écoutée par la seconde station de base ;
utiliser les informations de commande de liaison montante écoutées, les informations de commande de liaison montante intracellulaires et l'alerte en vue d'ajuster l'affectation de sous-bande dans la cellule de la première station de base (F1).

2. Procédé d'affectation de ressources radio selon la revendication 1, incluant l'étape dans laquelle la première station de base envoie un identifiant « par session » à la seconde station de base, par exemple un identifiant C-RNTI dans un système de technologie LTE, pour chaque équipement d'utilisateur desservi par la première cellule, et elle reçoit des identifiants pour chaque équipement d'utilisateur desservi par la seconde cellule.

3. Procédé d'affectation de ressources radio selon la revendication 1 ou 2, dans lequel la première station de base et la seconde station de base sont deux stations de base dans une grappe de deux stations de base ou plus en collaboration, et dans lequel un ensemble de codes d'étalement identifiant des transmissions dans chaque cellule, par exemple des codes d'étalement de Zadoff-Chu dans un système de technologie LTE, est partagé entre les stations de base.

4. Procédé d'affectation de ressources radio selon l'une quelconque des revendications précédentes, dans lequel la première station de base écoute également des messages de commande de liaison montante connexes à un échec de réception en liaison descendante à partir de l'équipement UE spécifique avec lequel la transmission de première station de base interfère, par exemple des messages d'accusé NACK dans un système de technologie LTE, et prépare l'ajustement de l'affectation de sous-bande.

5. Procédé d'affectation de ressources radio selon l'une quelconque des revendications précédentes, dans lequel l'alerte est reçue sur une liaison à un réseau central du système de communication, de préférence sur la liaison S1 au réseau central de paquets évolués dans un système de technologie LTE.

6. Procédé d'affectation de ressources radio selon l'une quelconque des revendications précédentes, dans lequel des blocs de ressources de temps/fréquence sont planifiés en vue d'une transmission en liaison montante par les équipements d'utilisateur et/ou d'une transmission en liaison descendante vers les équipements d'utilisateur dans les affectations de sous-bandes.

7. Procédé d'affectation de ressources radio selon l'une quelconque des revendications précédentes, dans lequel les affectations de sous-bandes tiennent compte de priorités d'équipements d'utilisateur des équipements d'utilisateur du système, afin d'atténuer des quelconques conflits d'affectation de sous-bande potentiels.

8. Procédé d'affectation de ressources radio selon l'une quelconque des revendications précédentes, dans lequel les informations de commande de liaison montante écoutées et les informations de commande de liaison montante intracellulaires incluent un ensemble ordonné de demandes de sous-bandes en provenance de chaque équipement d'utilisateur écouté ou desservi par la première cellule.

9. Procédé d'affectation de ressources radio selon les revendications 7 et 8, dans lequel chaque demande de sous-bande inclut une priorité d'équipement d'utilisateur par sous-bande, de préférence sous la forme d'une indication d'un débit de données potentiel pour chaque demande de sous-bande dans l'ensemble ordonné, de préférence dans un schéma de modulation et codage, MCS, dans un système de technologie LTE.

10. Procédé d'affectation de ressources radio selon l'une quelconque des revendications précédentes, dans lequel les affectations de sous-bandes tiennent compte d'un ordre de priorité de cellules des cellules au sein du système de communication.

11. Procédé d'affectation de ressources radio selon la revendication 10, dans lequel l'ordre de priorité de cellules détermine la façon dont les sous-bandes sont affectées lorsqu'il existe un conflit entre des informations de commande de liaison montante provenant d'équipements d'utilisateur dans différentes cellules, et de préférence dans lequel l'ordre de priorité de cellules correspond à une priorité circulaire, qui, de préférence, change avec chaque période CQI dans un système de technologie LTE.

12. Procédé d'affectation de ressources radio à utiliser dans un système de communication sans fil cellulaire avec une pluralité de stations de base (F1, F2, F3) configurée de manière à partager des affectations de sous-bandes entre une pluralité d'équipements d'utilisateur du système, et comprenant une première station de base (F1) fournissant une première cellule et une seconde station de base (F2) fournissant une seconde cellule, dans lequel procédé, la seconde station de base (F2) met en oeuvre le processus ci-dessous consistant à :
recevoir des informations de commande de liaison montante intracellulaires en provenance d'un ou plusieurs équipements d'utilisateur desservis par la seconde cellule et écouter des informations de commande de liaison montante transmises à partir d'un ou plusieurs équipements d'utilisateur desservis par la première cellule à la première station de base, et affecter des affectations de sous-bandes aux équipements d'utilisateur dans la seconde cellule, en fonction des informations de commande de liaison montante écoutées et intercellulaires ;
recevoir des messages de commande de liaison montante en provenance d'un équipement d'utilisateur spécifique desservi par la seconde cellule et présentant une affectation de sous-bande brouillée, les messages de commande de liaison montante étant connexes à un échec de réception d'une transmission en liaison descendante au niveau de l'équipement d'utilisateur spécifique ; **caractérisé par** l'étape ci-dessous consistant à :
envoyer une alerte concernant l'affectation de sous-bande d'équipement d'utilisateur brouillée à la première station de base (F1) afin de permettre à la première station de base d'ajuster les affectations de sous-bandes dans la cellule de la première station de base (F1), dans laquelle la transmission de la première station de base occasionnant un brouillage est une transmission à un équipement d'utilisateur dans une position où la transmission d'informations de commande de liaison montante de l'équipement d'utilisateur ne peut pas être écoutée par la seconde station de base.

13. Procédé d'affectation de ressources radio à utiliser dans un système de communication sans fil cellulaire avec une pluralité de stations de base (F1, F2, F3) configurée de manière à partager des affectations de sous-bandes entre une pluralité d'équipements d'utilisateur du système, chaque station de base étant en outre configurée de manière à fournir sa propre cellule, dans lequel procédé, le système met en oeuvre le processus ci-dessous dans lequel :
les stations de base reçoivent des informations de commande de liaison montante intracellulaires en provenance d'un ou plusieurs équipements d'utilisateur desservis par leur propre cellule, et écoutent des informations de commande de liaison montante transmises à partir d'un ou plusieurs équipements d'utilisateur desservis par la cellule de ladite une ou desdites plusieurs autres stations de base ;
les stations de base affectent des affectations de sous-bandes audit un ou auxdits plusieurs équipements d'utilisateur dans leur propre cellule, en tenant compte des informations de commande de liaison montante écoutées et intercellulaires ; **caractérisé par** les étapes ci-dessous dans lesquelles :
une station de base envoie une alerte concernant une affectation de sous-bande d'équipement d'utilisateur spécifique avec laquelle une autre transmission de station de base interfère, dans lequel l'autre transmission de station de base occasionnant un brouillage est une transmission à un équipement d'utilisateur dans une position où la transmission d'informations de commande de liaison montante de l'équipement d'utilisateur ne peut pas être écoutée par la station de base en question ; et
l'autre station de base utilise ses informations de commande de liaison montante intracellulaires, ses informations de commande de liaison montante écoutées et l'alerte pour ajuster une affectation de sous-bande dans sa propre cellule.

14. Première station de base dans un système de communication sans fil cellulaire avec une pluralité de stations de base (F1, F2, F3) configurée de manière à partager des affectations de sous-bandes entre une pluralité d'équipements d'utilisateur du système, la première station de base (F1) fournissant une première cellule, et une seconde station de base (F2) fournissant une seconde cellule, la première station de base (F1) comprenant :
un récepteur configuré de manière à recevoir des informations de commande de liaison montante intracellulaires en provenance d'un ou plusieurs équipements d'utilisateur desservis par la première cellule et à écouter des informations de commande de liaison montante transmises à partir d'un ou plusieurs équipements d'utilisateur desservis par la seconde cellule, à la seconde station de base ;
un contrôleur configuré de manière à affecter une affectation de sous-bande en tenant compte des informations de commande de liaison montante intracellulaires et des informations de commande de liaison montante écoutées ; **caractérisée par** :
une interface configurée de manière à recevoir une alerte en provenance de la seconde station de base concernant une affectation de sous-bande d'équipement d'utilisateur spécifique dans la seconde cellule avec laquelle la transmission de la première station de base (F1) interfère ; dans lequel la transmission de la première station de base occasionnant un brouillage est une transmission à un équipement d'utilisateur dans une position où la transmission d'informations de commande de liaison montante de l'équipement d'utilisateur ne peut pas être écoutée par la seconde station de base ; et dans lequel
le contrôleur est configuré de manière à utiliser les informations de commande de liaison montante écoutées, les informations de commande de liaison montante intracellulaires et l'alerte en vue d'ajuster l'affectation de sous-bande dans la cellule de la première station de base (F1).

15. Seconde station de base dans un système de communication sans fil cellulaire avec une pluralité de stations de base (F1, F2, F3) configurée de manière à partager des affectations de sous-bandes entre une pluralité d'équipements d'utilisateur du système, une première station de base (F1) fournissant une première cellule, et la seconde station de base (F2) fournissant une seconde cellule, la seconde station de base (F2) comprenant :
un récepteur configuré de manière à recevoir des informations de commande de liaison montante intracellulaires en provenance d'un ou plusieurs équipements d'utilisateur desservis par la seconde cellule et à écouter des informations de commande de liaison montante transmises à partir d'un ou plusieurs équipements d'utilisateur desservis par la première cellule à la première station de base ;
un contrôleur configuré de manière à affecter des affectations de sous-bandes aux équipements d'utilisateur dans la seconde cellule en fonction des informations de commande de liaison montante écoutées et intercellulaires ; **caractérisée en ce que**
le récepteur est configuré de manière à recevoir des messages de commande de liaison montante en provenance d'un équipement d'utilisateur spécifique desservi par la seconde cellule et présentant une affectation de sous-bande brouillée, les messages de commande de liaison montante étant connexes à un échec de réception d'une transmission en liaison descendante à l'équipement d'utilisateur spécifique ; et comprenant en outre :
une interface configurée de manière à envoyer une alerte concernant l'affectation de sous-bande d'équipement d'utilisateur brouillée à la première station de base (F1), en vue de permettre à la première station de base d'ajuster les affectations de sous-bandes dans la première cellule, dans laquelle la transmission de la première station de base occasionnant un brouillage est une transmission à un équipement d'utilisateur dans une position où la transmission d'informations de commande de liaison montante de l'équipement d'utilisateur ne peut pas être écoutée par la seconde station de base.

16. Système de communication sans fil cellulaire avec une pluralité de stations de base (F1, F2, F3) configurée de manière à partager des affectations de sous-bandes entre une pluralité d'équipements d'utilisateur du système et lesquelles sont chacune configurées de manière à fournir une cellule, dans lequel :
les stations de base incluent des récepteurs configurés de manière à recevoir des informations de commande de liaison montante intracellulaires en provenance d'un ou plusieurs équipements d'utilisateur desservis par leur propre cellule, et à écouter des informations de commande de liaison montante transmises à partir d' un ou plusieurs équipements d' utilisateur desservis par la cellule de ladite une ou desdites plusieurs autres stations de base ;
les stations de base incluent des contrôleurs configurés de manière à affecter des affectations de sous-bandes audit un ou auxdits plusieurs équipements d'utilisateur dans leur propre cellule, en tenant compte des informations de commande de liaison montante écoutées et intercellulaires ; **caractérisé en ce que**
les stations de base incluent une interface configurée de manière à envoyer une alerte concernant une affectation de sous-bande d'équipement d'utilisateur spécifique dans leur propre cellule avec laquelle une autre transmission de station de base interfère, dans lequel l'autre transmission de station de base occasionnant un brouillage est une transmission à un équipement d'utilisateur dans une position où la transmission d'informations de commande de liaison montante de l'équipement d'utilisateur ne peut pas être écoutée par la station de base en question ; et dans lequel
les contrôleurs de stations de base sont configurés de manière à utiliser les informations de commande de liaison montante écoutées et intercellulaires, ainsi que l'alerte, en vue d'ajuster une affectation de sous-bande dans leur propre cellule.
